# EUROPEAN PATENT SPECIFICATION

(11) **EP 2 914 130 B1**
(45) Date of publication and mention of the grant of the patent: **06.02.2019**
(21) Application number: 13850579.7
(22) Date of filing: 04.11.2013
(51) Int. Cl.: A23L 7/10, A21D 8/02, A21D 13/00, A21D 13/31, A21D 13/37

(54) **METHOD FOR PRODUCING CRISPY FOODSTUFF WITH SOFT PORTION**
HERSTELLUNG EINES KNUSPRIGEN NAHRUNGSMITTELS MIT EINEM WEICHEN TEIL
PROCÉDÉ POUR LA FABRICATION D'UN PRODUIT ALIMENTAIRE CROUSTILLANT COMPRENANT UNE PARTIE MOELLEUSE

(30) Priority: 05.11.2012 US 201261722543 P
(43) Date of publication of application: 09.09.2015
(73) Proprietor: Intercontinental Great Brands LLC, East Hanover, NJ 07936 (US)
(72) Inventor: VEMULAPALLI, Vani, Whippany, NJ 07981 (US); COLEMAN, Edward, C., New Fairfield, CT 06812 (US); KARWOWSKI, Jan, Franklin Lakes, NJ 07417 (US)
(74) Representative: Boult Wade Tennant LLP
(86) International application number: PCT/US2013/068291
(87) International publication number: WO 2014/071300

(56) References cited:
- EP-A1- 0 512 249
- EP-A1- 2 100 511
- EP-A2- 0 184 964
- WO-A1-2011/134494
- GB-A- 847 677
- US-A- 4 873 093
- US-A1- 2004 161 502
- US-A1- 2010 239 720
- US-A1- 2010 239 720
- US-B2- 6 472 005
- US-B2- 6 623 778
- DATABASE GNPD [Online] MINTEL; Anonymous: "Milk Filled Cereal", XP002756489, Database accession no. 1915629
- DATABASE GNPD [Online] MINTEL; Anonymous: "Speculoos Filled Chocolate Cereal", XP002756490, Database accession no. 1907107

## Description

### BACKGROUND OF THE INVENTION

The present invention generally relates to food products that have a dual texture. It is desirable to develop a food product that has a first texture that is crispy or both crispy and crunchy and a second texture that is soft and/or creamy. It is also desirable that such a product retain its dual texture characteristics even after a long shelf life period. Such products are difficult to achieve in certain baked goods because, for example, fat migration from a soft and/or creamy portion (such as a fat-based filling) to an outer shell crispy portion (e.g., a dough-based casing) has a tendency to reduce the creaminess of the filling and the crispness of the outer shell and degrade the dual texture qualities of the product.
WO2011/134494 discloses a co-extruded dual component food product of the type comprising a cereal-based outer component and an inner cream textured component encapsulated within the cereal-based outer component.
EP2100511 discloses a shelf-stable, filled, baked crisply snack which possesses a crispy textured casing and a moist, soft textured filling.
US2010/239720 discloses a dual textured, multicomponent snack food item comprising an outer jacket and a center filling encased within the outer jacket.

### BRIEF SUMMARY OF THE INVENTION

The present invention is defined in the claims appended hereto. The present invention provides a method for producing a dual-textured foodstuff and includes admixing ingredients such as flour and water to form a slurry; exposing the slurry to heat at conditions sufficient to produce a gelatinized dough; adding a fat-based component to the dough to form a prebaked foodstuff; and baking the prebaked foodstuff to obtain a foodstuff having a dual texture. The dual texture includes a baked, fat-based component having a soft texture and a baked dough-based component having a crispy texture.

In some embodiments, the slurry may be heated by steam, which may be injected into the slurry. The steam may have a temperature of 100°C and may be injected for about 10 minutes to about 20 minutesThe slurry is exposed to heat sufficient to produce 90% to 100% gelatinization of the flour.

In some embodiments, additional ingredients are mixed with the gelatinized dough before adding the fat-based component. Such ingredients may include a starch, such as potato starch or pregelatinized corn starch, sugar, leavening, or processing aid.

The dough is configured to accept the fat-based component by sheeting the dough into at least two layers and adding the fat-based
component between the sheeted dough layers, or the dough and the fat-based component may be extruded. Adding the fat-based component to the dough may entail placing the fat-based component in direct contact with the dough. In some embodiments, the fat-based component is completely enclosed within the baked dough-based component. In some embodiments, the foodstuff maintains the dual texture for at least 6 months after baking.

The flour of the slurry comprises about 70 wt% to 80 wt% of the baked dough-based component. The dough-based component includes a fat content of less than 5 wt % of the dough-based component. The fat-based component includes a fat content of at least 40 wt%.

According to some embodiments of the present invention a method of producing a baked foodstuff includes forming a first dough layer having a first affinity for fat migration; forming a gelatinized dough-based fat migration-barrier layer including by admixing ingredients comprising flour and water to form a slurry and exposing the slurry to heat at conditions sufficient to transform the slurry to an at least partially gelatinized dough; assembling the foodstuff by positioning the gelatinized dough-based fat migration barrier layer between a first dough layer and an edible composition having a fat content that is greater than the fat content of the first dough layer; and baking the pre-baked food stuff to form a baked foodstuff.

According to the present invention, the method produces a dual-textured foodstuff which includes a baked dough-based component based on a pre-baked heat-treated flour, and a baked fat-based component, wherein the foodstuff preferably exhibits a dual texture throughout the shelf life of the foodstuff. The dual texture includes a crispy texture of the dough-based component and a soft texture of the fat-based component.

The baked fat-based component may be in direct contact with the baked dough-based component. In some embodiments, the fat-based component is completely enclosed by the dough-based component. In some embodiments, the baked dough-based component makes up about 45 wt% to about 90 wt% of the foodstuff, or about 60 wt% to about 75 wt% of the foodstuff. In certain embodiments, the fat-based component makes up about 10 wt% to about 55 wt% of the foodstuff, or about 25 wt% to about 40 wt% of
the foodstuff. The dough-based component may, for example, be a cracker, while the fat-based component may be sweet or savory.

The dough-based component has a first fat concentration, with the fat-based layer having a second fat concentration that is higher than the first fat concentration. The first fat concentration is less than 5 wt% and the second fat concentration is greater than 40 wt%. The first and second fat concentration may each remain significantly constant throughout the shelf life of the foodstuff.

According to some embodiments of the present invention, the method provides a dual textured cooked foodstuff including a crispy cooked dough-based portion based on a steam-treated slurry of water and flour; a cooked soft fat-based filling in direct contact with the cooked dough portion; and a fat gradient between the cooked soft fat-based filling and the crispy cooked dough-based portion that is approximately zero.

### BRIEF DESCRIPTION OF THE SEVERAL VIEWS OF THE DRAWINGS

Fig. 1 is a process flow diagram of an exemplary embodiment of the present invention.
Figs. 2-5 are views of an exemplary embodiment of a baked foodstuff obtainable with the method of the present invention.

### DETAILED DESCRIPTION OF THE INVENTION

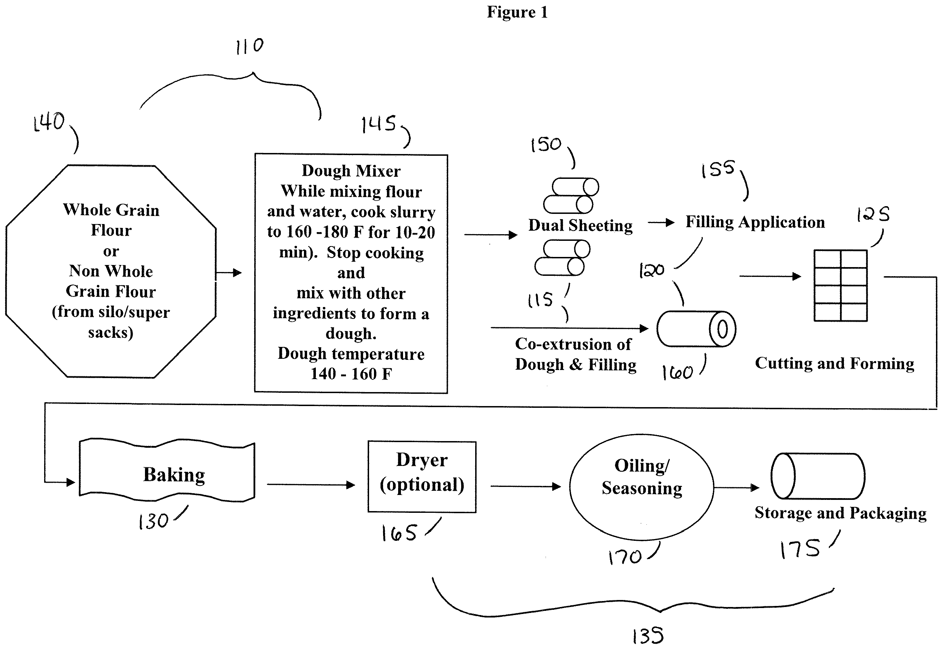

Referring to Figure 1 in detail, the flow chart shows a general process scheme for making a dual-textured foodstuff, in accordance with an exemplary embodiment of the present invention. As illustrated, a dual-textured foodstuff may be produced by a method that includes: a) dough preparation 110; b) dough forming 115; c) filling addition or application 120; c) cutting and forming 125; d) baking 130; and e) finishing and/or packaging 135. In one embodiment, whole grain or non-whole grain flour 140 may be added to a dough mixer with water to create a slurry, and the slurry may be heated to a selected temperature (e.g., 71.1 to 82.2°C (160°F to 180°F)) for a selected period of time (e.g., 10 minutes to 20 minutes) to gelatinize or at least partially gelatinize the flour 145. In
one embodiment, additional ingredients may be added and mixed to the slurry or to the dough 145. In one embodiment, the dough may then be sheeted 150, followed by an application of filling 155, to create a prebaked foodstuff. The dough and filling may be coextruded to form a prebaked foodstuff 160. Next, the prebaked foodstuff may be cut and/or formed into a desired size and shape 125. The foodstuff is then baked to form a multi-textured foodstuff 130. The multi-textured food stuff includes a crispy and/or crunchy dough-based portion and a soft and/or creamy filling portion. After baking, the multi-textured snack may optionally be dried 165. Oil and/or seasoning may optionally be applied 170, followed by packaging and storage of the baked foodstuff 175.

The present invention can provide a shelf-stable, baked crispy and/or crunchy filled foodstuff. In one embodiment, the foodstuff has a soft, fat-based portion (e.g., a filling) and a crispy and/or crunchy dough-based portion (e.g., a casing). The foodstuff may maintain a multiple texture (e.g. a dual texture) for an extended period of time after cooking (e.g., baking, frying) and, in some embodiments, throughout the shelf life of the foodstuff. The foodstuff may be generally prepared by forming dough, adding a fat-based portion, such as a filling, to create a prebaked foodstuff, and baking to form the dual-textured foodstuff having a crispy dough-based portion and a soft fat-based portion. The dough is prepared by heating ingredients such as flour and water to a gelatinization temperature, prior to baking. In some embodiments, the gelatinized dough is admixed with further ingredients before adding a fat-based portion.

In one embodiment, the foodstuff includes a dough-based portion (e.g., a casing or a layer) that is not receptive to fat migration from an adjoining fat-based portion (e.g., a fat-based filling). The resulting foodstuff may be characterized as having a crispy and/or crunchy texture from the dough-based portion and a creamy texture from the fat-based portion even after baking. Moreover, the exemplary food stuff preferably retains this dual texture feature for an extended period of time after baking (e.g., the shelf-life of the product).

In one embodiment, fat migration between the fat-based portion and the dough-based portion is substantially eliminated for at least 1 month of shelf-life. In one embodiment, fat migration between the fat-based portion and the dough-based portion is substantially eliminated for at least 2 months of shelf-life. In one embodiment, fat migration between the fat-based portion and the dough-based portion is substantially eliminated for at least 3 months of shelf-life. In one embodiment, fat migration between the fat-based portion and the dough-based portion is substantially eliminated for at least 4 months of shelf-life. In one embodiment, fat migration between the fat-based portion and the dough-based portion is substantially eliminated for at least 5 months of shelf-life. In one embodiment, fat migration between the fat-based portion and the dough-based portion is substantially eliminated for at least 6 months of shelf-life. In one embodiment, fat migration between the fat-based portion and the dough-based portion is substantially eliminated for at least 1 year of shelf-life.

The baked food product may include a casing that includes or is formed from the dough-based portion. In food products that include such a casing, the dough-based portion may be formed to at least partially and in some instances, completely or substantially completely, surround a fat based portion.

An exemplary baked food product may also include a barrier layer (e.g., a fat migration barrier layer) that includes or is formed from the dough-based portion. In some embodiments, the dough-based portion is formed into a fat migration barrier. In some embodiments, the dough-based portion is formed into a moisture migration barrier. In some embodiments, the dough-based portion is formed into both a fat migration barrier and a moisture migration barrier. In food products that include such a barrier layer, the barrier layer may be positioned between a layer that is more receptive to fat migration and/or moisture migration and a fat-based and/or moisture-based composition (e.g. a fat-based filling and/or a moisture based filling).

In some embodiments, the inclusion of fat migration inclusions such may enhance the fat and/or oil migration barrier functionality. In some embodiments, the fat migration inclusions are soluble. In some embodiments, the fat migration inclusions are insoluble. For example, fat migration inclusions including soluble and/or insoluble fibers may be added to a dough-based portion to enhance the fat migration barrier properties of the dough-based portion. Insoluble fat migration inclusions such as fibers, including corn, oat, and/or soy, may be added at levels of about 5 wt% to about 10 wt% of the pre-cooked dough-based portion; about 10 wt% of the pre-cooked dough-based portion; about 9 wt% of the pre-cooked dough-based portion; about 8 wt% of the pre-cooked dough-based portion; about 7 wt% of the pre-cooked dough-based portion; about 6 wt% of the pre-cooked dough-based portion; or about 5 wt% of the pre-cooked dough-based portion. In some embodiments, insoluble fibers include large surface areas which may absorb free fat and/or oil and thereby enhance the fat and/or oil migration barrier properties of the dough-based portion.

Soluble fat migration inclusions such as soluble fibers, including inulin, fructooligosaccharides, and/or resistant starches, may be added at levels of about 5 wt% to about 20 wt% of the pre-cooked dough-based portion; about 20 wt% of the pre-cooked dough-based portion; about 19 wt% of the pre-cooked dough-based portion; about 18 wt% of the pre-cooked dough-based portion; about 17 wt% of the pre-cooked dough-based portion; about 16 wt% of the pre-cooked dough-based portion; about 15 wt% of the pre-cooked dough-based portion; about 14 wt% of the pre-cooked dough-based portion; about 13 wt% of the pre-cooked dough-based portion; about 12 wt% of the pre-cooked dough-based portion; about 11 wt% of the pre-cooked dough-based portion; about 10 wt% of the pre-cooked dough-based portion; about 9 wt% of the pre-cooked dough-based portion; about 8 wt% of the pre-cooked dough-based portion; about 7 wt% of the pre-cooked dough-based portion; about 6 wt% of the pre-cooked dough-based portion; or about 5 wt% of the pre-cooked dough-based portion.

In some embodiments, low levels of flow agents, such as silicon dioxide and/or microcrystalline cellulose, may be added at levels of about 1 wt% or less of the pre-cooked dough-based portion. Such flow agents may have very large surface areas which may absorb free fat and/or oil and thereby enhance the fat and/or oil migration barrier properties of the dough-based portion. Certain soy and milk proteins may be added to the pre-cooked dough-based portion to enhance fat and/or oil migration barrier properties.

Dough-based portions having enhanced moisture barrier properties may be desirable, for instance, in products having a fat-based portion or a filling portion that is not fat-based with a water activity of about 0.5 or greater. In some embodiments, moisture barrier inclusions such as proteins, fats and/or polyols may be added to the dough-based portion to enhance the moisture migration barrier properties of the dough-based portion. Inclusion of whey protein concentrates or isolates, soy protein concentrates, and/or corn zein in the dough-based portion may enhance the formation of a hydrophobic barrier layer, thereby reducing migration of moisture between layers and/or portions of the product. Moisture barrier inclusions such as whey protein concentrates and isolates, soy protein concentrates, and/or corn zein may be added in an amount of about 5 wt% to about 20 wt% of the pre-cooked dough-based portion; about 20 wt% of the pre-cooked dough-based portion; about 19 wt% of the pre-cooked dough-based portion; about 18 wt% of the pre-cooked dough-based portion; about 17 wt% of the pre-cooked dough-based portion; about 16 wt% of the pre-cooked dough-based portion; about 15 wt% of the pre-cooked dough-based portion; about 14 wt% of the pre-cooked dough-based portion; about 13 wt% of the pre-cooked dough-based portion; about 12 wt% of the pre-cooked dough-based portion; about 11 wt% of the pre-cooked dough-based portion; about 10 wt% of the pre-cooked dough-based portion; about 9 wt% of the pre-cooked dough-based portion; about 8 wt% of the pre-cooked dough-based portion; about 7 wt% of the pre-cooked dough-based portion; about 6 wt% of the pre-cooked dough-based portion; or about 5 wt% of the pre-cooked dough-based portion.

In some embodiments, polyols such as glycerine, erythritol, maltitol, and the like may be included in the dough-based portion. In some embodiments, such polyols may be included in order to manipulate the water activity of the dough-based portion. In some embodiments, the water activity of the dough-based portion is manipulated in relation of the water activity of a fat-based portion, such that a driving force for moisture migration between the portions is reduced.

In some embodiments, incorporation of fat in the dough-based portion can enhance the moisture migration barrier properties of the dough-based portion. It is believed that certain fats which may be incorporated into the dough-based portion may partially solidify upon cooling and form a complex with the proteins. Such a structure is believed to discourage moisture migration into the dough-based portion. Suitable fats which may be incorporated into the dough-based portion include those fats which are not pure liquid at room temperature, include but not limited to shortening, palm oil, soybean oil, cottonseed oil, and/or palm kernel oil.

The dough-based portion may be formed by gelatinizing or at least partially gelatinizing a slurry that includes water and flour. In one embodiment, the at least partially gelatinized slurry forms a mass. In one embodiment, the mass is a dough that may be formed directly into the dough-based portion by, for example, sheeting or extrusion or any other known method. In some embodiments, the mass may be combined with other ingredients before forming by sheeting, extrusion, etc.

### Dough-based portion

In some embodiments, a dough-based portion may be prepared in a process that includes combining flour (e.g., a starch-based flour such as whole wheat flour, enriched flour, corn flour, potato flour, rice flour, oat flour, barley flour, and the like) and water to form a slurry and heating the slurry before baking. In some embodiments, a dough-based portion may be prepared as described in U.S. Patent Application Publication No. 2008/0003340. In some embodiments, a dough-based portion may be prepared as described in the U.S. Patent Application Publication No. 2013/0101698.

In some embodiments, the slurry includes whole wheat flour, enriched wheat flour, or the like, and combinations thereof. In some embodiments, the amounts of flour and water in the slurry can be adjusted according to the desired consistency and texture of the dough. For example, in some embodiments the ratio of flour to water by weight is about 10:1; about 10:2; about 10:3; about 10:4; about 10:5; about 10:6; about 10:7; about 10:8; about 10:9; about 1:1; about 9:10; about 8:10; about 7:10; about 6:10; or about 5:10. In one embodiment, the ratio of flour to water by weight is about 10:4.7.

In some embodiments, additional ingredients may be included in the slurry based on, for example, desired taste, nutrition, texture, and visual appeal of the dough. In some embodiments, selection of the particular additional ingredients is based upon the response of the particular ingredient to heating of the slurry. For example, in some embodiments additional ingredients to be combined with the slurry are only those ingredients that would not inhibit gelatinization or at least partial gelatinization of the flour within the slurry. Exemplary additional ingredients include, but are not limited to, whole grains, non-whole grains, flavor and/or texture inclusions, dough salt, fiber, protein, colors, fruits, and/or vegetables.

In some embodiments, the ingredients of the slurry are admixed, and the slurry is exposed to heat. In some embodiments, the slurry is exposed to heat at conditions sufficient to gelatinize the flour. In some embodiments, conditions sufficient to gelatinize the flour include a time and temperature effective to gelatinize at least a portion of, and in some embodiments essentially completely, the flour of the slurry. In some embodiments, the slurry is mixed during the heating steps.

In some embodiments, the slurry is exposed to pre-selected temperatures for a pre-selected time in order to impact the textural properties of the finished food-stuff. In some embodiments, the slurry is heated to temperatures based upon the desired gelatinization reaction. For example, the slurry may be heated to the a gelatinization temperature of the slurry. The gelatinization temperature of the slurry is 65.5ºC to 93.3ºC; about 68.3ºC to about 90.6ºC; about 71.1ºC to about 87.8ºC; about 73.9ºC to about 85ºC; about 76.7ºC to about 82.2ºC; about 65.5ºC to about 82.2ºC, about 68.3ºC to about 79.4ºC, or about 71.1ºC to about 76.7ºC (t 150ºF to 200ºF; preferably about 155ºF to about 195ºF; about 160ºF to about 190ºF; about 165ºF to about 185ºF; about 170ºF to about 180ºF; about 150ºF to about 180ºF, about 155ºF to about 175ºF, or about 160ºF to about 170ºF). In some embodiments, the gelatinization temperature of the slurry is about 65.5ºC; about 68.3ºC; about 71.1ºC; about 73.9ºC; about 76.7ºC; about 79.4ºC; about 82.2ºC; about 85ºC; about 87.8ºC; about 90.6ºC; or about 93.3ºC (about 150ºF; about 155ºF; about 160ºF; about 165ºF; about 170ºF; about 175ºF; about 180ºF; about 185ºF; about 190ºF; about 195ºF; or about 200ºF).

In some embodiments the slurry is exposed to heat in the form of steam. For example, in some embodiments, the slurry is injected with steam. In some embodiments, the slurry is injected with steam to produce uniform heating of the slurry and gelatinization or at least partial gelatinization. In some embodiments, the steam is introduced at temperatures of about 51.7°C to about 115.6°C; about 65.5°C to about 100°C; or at about 100ºC (about 125°F to about 240°F; about 150°F to about 212°F; or at about 212ºF).

In some embodiments, the slurry is exposed to heat for a duration selected to achieve a particular gelatinization effect. For example, heat may be introduced to the slurry for a period of 8 minutes to 20 minutes, or about 10 minutes to about 15 minutes.

In some embodiments, the dough is mixed during the time period that it is exposed to heat (e.g., in the form of steam). In some embodiments the dough is mixed at
a rate of about 15 rpm to about 60 rpm; about 20 rpm to about 60 rpm; about 15 rpm to about 25 rpm; about 17 rpm to about 23 rpm; about 19 rpm to about 21 rpm; or about 20 rpm.

In some embodiments, the slurry is exposed to heat by any method or heat source that is effective to achieve the desired gelatinization reaction and result. The slurry is exposed to heat which is sufficient to produce 90% to 100 % gelatinization of the flour. For example, suitable forms of heating may include indirect heating, jacket heat, scrape surface heater, heated water, microwave heating, dielectric heating and combinations thereof and the like.

The gelatinized or at least partially gelatinized slurry forms a mass or dough. The gelatinized mass or dough may have a thicker, more viscous, consistency than the slurry from which it is derived. In one embodiment, the mass is a dough that may be formed directly into the dough-based portion by, for example, sheeting or dough extrusion or any other known method such as those discussed herein. In some embodiments, the mass may be combined with other ingredients before forming by sheeting, extrusion, etc. Examples of such additional ingredients include, but are not limited to, fibers, proteins, cheese, flavors, fruits, veggies, soy pieces, meat pieces, seeds, nuts, specialty whole grains such as quinoa or other inclusions, and combinations thereof.

The pre-baked dough includes flour (e.g., in a slurry such as a water/flour slurry) which was heated (to gelatinization or partial gelatinization) before baking. The pre-heated flour makes up 70 wt% to 80 wt% of the pre-baked dough.
In some embodiments, the foregoing percentages reflect an increase moisture content of approximately 2 percent to approximately 3 percent as a result of steam treatment as compared to the percentage prior to steam treatment.

It is believed that the gelatinization of the flour may modify the starch and protein properties of the flour while retaining the functionality of the protein, resulting in unique and desirable characteristics of the dough during or after processing and/or baking. Preparation of a foodstuff according to embodiments of the present invention may allow for incorporation of higher levels of any type of whole grains (such as wheat, corn, rice, barley, oats, and/or multi-grains), added fiber and protein. In some embodiments, whole grains, proteins and fibers are incorporated into a matrix formed during the pre-heating and gelatinizing step, resulting in a more palatable taste and texture than may be otherwise associated with incorporation of such levels of these ingredients. In some embodiments, heating and gelatinizing of the flour slurry before baking the dough allows for incorporation of whole grains, fiber and protein without a grainy, coarse texture and taste in the dough-based portion of the foodstuff which may be otherwise associated with incorporation of such levels of these ingredients.

In some embodiments, heating and gelatinizing of the flour slurry before baking the dough allows for incorporation of inclusions in the dough-based portion, as they are incorporated into a matrix formed during the initial gelatinization step. Such incorporation of the inclusions into a matrix formed during the initial gelatinization step may also allow for thinner sheeting of the dough while maintaining the inclusions within the dough.

In some embodiments, the dough is admixed with additional ingredients after heating and before baking. In some embodiments, additional ingredients, such as sweeteners or flavors, may be included to produce a desired taste. In some embodiments, additional ingredients, such as starch (gelatinized or ungelatinized), may be included to produce a desired texture. In some embodiments, the dough is admixed with ingredients such as, but not limited to, sugar, pre-gelatinized starch, potato starch, and/or additives
such as sodium acid pyrophosphate, calcium phosphate monobasic, and/or sodium bicarbonate.

In addition to the foregoing, the doughs employed in some embodiments of the present invention may include other additives conventionally employed in crackers and cookies. Such additives may include, for example, dairy by-products, enzyme modified milk powder, whey, soluble or insoluble edible fiber, such as inulin or other fructooligosaccharides, resistant starch, oat fiber, corn bran, wheat bran, oat bran, rice bran, and soluble polydextrose, egg or egg by-products, cocoa, peanut butter, vanilla or other flavorings, flour substitutes or bulking agents, such as polydextrose, hollocellulose, microcrystalline cellulose, mixtures thereof, and the like, as well as inclusions or particulates such as nuts, raisins, coconut, flavored chips such as chocolate chips, butterscotch chips, white chocolate chips, peanut butter chips, caramel chips, and the like in conventional amounts. In some embodiments, an insoluble fiber such as resistant starch or oat fiber may be employed in the dough. In embodiments of the invention, these additives, such as fiber, chocolate chips or other flavor chips, may be employed in amounts up to about 25% by weight, for example from about 10% by weight to about 20% by weight, based upon the weight of the dough.

A source of protein, which is suitable for inclusion in baked goods, may be included in the doughs prepared in accordance with the method of the present invention. In one embodiment, the inclusion of protein promotes Maillard browning. The source of protein may include non-fat dry milk solids, dried or powdered eggs, mixtures thereof, and the like. Also, protein concentrates and isolates from various sources, such as rice, soy, and/or dairy, may be included in the dough-based portion. The amount of the proteinaceous source may, for example, range up to about 20 wt%, based upon the weight of the dough.

The dough compositions may contain a leavening system in an amount of up to about 2.5 wt%, based upon the weight of the dough before baking. Exemplary chemical leavening agents or pH-adjusting agents which may be used include alkaline materials and acidic materials such as sodium bicarbonate, ammonium bicarbonate, calcium acid phosphate, sodium acid pyrophosphate, diammonium phosphate, tartaric acid, mixtures thereof, and the like. The leavening agent may include yeast alone or in combination with chemical leavening agents.

Enzymes conventionally used in cracker production, such as amylases and proteases, may be included in the dough in conventional amounts in embodiments of the present invention.

The doughs may include antimycotics or preservatives, such as calcium propionate, potassium sorbate, sorbic acid, and the like. Exemplary amounts may range up to about 1% by weight of the dough, to assure microbial shelf-stability. In some embodiments, the dough has a low water activity and therefore does not include or require preservatives.

Emulsifiers may be included in effective, emulsifying amounts in the doughs. Exemplary emulsifiers which may be used include, mono- and di-glycerides, polyoxyethylene sorbitan fatty acid esters, lecithin, stearoyl lactylates, and mixtures thereof. Exemplary of the polyoxyethylene sorbitan fatty acid esters which may be used are water-soluble polysorbates such as polyoxyethylene (20) sorbitan monostearate (polysorbate 60), polyoxyethylene (20) sorbitan monooleate (polysorbate 80), and mixtures thereof. Examples of natural lecithins which may be used include those derived from plants such as soybean, rapeseed, sunflower, or corn, and those derived from animal sources such as egg yolk. Soybean-oil-derived lecithins are preferred. Exemplary of the stearoyl lactylates are alkali and alkaline stearoyl lactylates such as sodium stearoyl lactylate, calcium stearoyl lactylate, DATEM and mixtures thereof. Exemplary amounts of the emulsifier which may be used range up to about 3% by weight of the dough.

In some embodiments, a dough is admixed with one or more processing aids after heating and before baking. In some embodiments, processing aids may be desirable improve the consistency of the dough for forming, for example, a casing or outer layer of the foodstuff. For example, oil may be admixed to the dough as a processing aid. In addition to providing physical benefits to processing, oil may contribute improved taste to the finished product. Oils useful in the present methods and products may include high oleic canola oil, soybean oil, safflower oil, and/or solid fats such as shortening.

The inclusion of any amount of any additional ingredients, such as those described above, to the dough after heating before baking may be optimized according to the desired taste and texture of the baked dough-based portion. For example, leavening
and starch may be included in order to produce a blistering effect of the dough-based portion upon baking.

In some embodiments, the fat content of the dough or baked dough-based portion is less than about 7 wt%; or less than about 5 wt%.

Once all ingredients are incorporated, the dough may be formed into the dough-based portion by, for example, sheeting or dough extrusion or any other known method, as discussed herein. In some embodiments, the dough-based portion exhibits desirable strength characteristics such as elasticity and/or viscosity.

### Fat-based Portion

As discussed above, foodstuffs made in accordance with the present invention may include a fat-based portion (e.g., a filling). In some embodiments, any edible fat-based portion, including commercially available fillings, may be employed in embodiments of the present invention. The fat-based portion may be savory or sweet. In some embodiments, the fat based filling is a nut butter filling. In some embodiments, a suitable fat-based portion is bake-stable. In some embodiments, a suitable fat-based portion includes a composition and/or method of making a composition as disclosed in U.S. Patent Application Publication No. 2010/0209588.

In some embodiments, a suitable fat-based portion may be prepared according to any of the following formulations:

**Table 1: Exemplary Fat-Based Portion Formulations**

| **Formulation** | **1** | **2** | **3** | **4** | **5** |
|---|---|---|---|---|---|
| **Ingredients** | % | % | % | % | % |
| Dairy powders | 31 | 31 | 31 | 28 | 30 |
| Lactose | 19.5 | 18 | 13 | 0 | 0 |
| Vegetable fat | 18 | 18 | 0 | 0 | 0 |
| Vegetable oil | 15 | 15 | 35 | 28 | 28 |
| Starch | 5 | 10 | 5 | 0 | 10 |
| Maltose | 0 | 0 | 0 | 25 | 25 |
| Ground wheat germ | 0 | 0 | 0 | 12 | 0 |
| Calcium sulfate | 5 | 0 | 5 | 0 | 0 |
| Calcium stearate | 3.5 | 5 | 8 | 0 | 0 |
| Acid | 0.5 | 0.5 | 0.5 | 0.1 | 0.1 |
| Salt | 1.5 | 1.5 | 1.5 | 0.5 | 0.5 |
| Flavor | 0.65 | 0.65 | 0.65 | 1.3 | 1.3 |
| Lecithin | 0.3 | 0.3 | 0.3 | 5 | 4 |
| Mono & di glycerides | 0 | 0 | 0 | 0 | 1 |
| Color | 0.05 | 0.05 | 0.05 | 0.1 | 0.1 |
| **Total** | 100 | 100 | 100 | 100 | 100 |

Another suitable fat-based portion includes Peanut Butter No. 2 Dark Roast, produced by Tara Foods, Albany, GA.

A fat-based portion suitable for the present invention may have a soft texture. In some embodiments, a fat-based portion maintains its soft texture after baking. In some embodiments, a fat-based portion maintains its soft texture throughout the shelf life of the foodstuff product.

In some embodiments, the fat content of the fat-based portion is about about 40 wt% to about 70 wt% of the fat-based portion; about 45 wt% to about 65 wt% of the fat-based portion; about 50 wt% to about 60 wt% of the fat-based portion; about 40 wt% of the fat-based portion; about 45 wt% of the fat-based portion; about 50 wt% of the fat-based portion; about 55 wt% of the fat-based portion; about 60 wt% of the fat-based portion; about 65 wt% of the fat-based portion; about 70 wt% of the fat-based portion; about 75 wt% of the fat-based portion; or about 80 wt% of the fat-based portion.

In some embodiments, a suitable filling has a low water activity. In some embodiments, a suitable filling has a water activity of less than about 0.5

In some embodiments, a fat-based portion is bake-stable in that the fat-based portion does not boil during baking.

### Assembling

A foodstuff made in accordance with the present invention includes a dough-based portion and a fat-based portion. Multiple variations of combinations of dough-based portion(s) and fat-based portion(s) are possible. The dough-based portion and the fat-based portion may be combined in the form of a casing and filling respectively. In some embodiments, the filling is not a fat-based filling. The foodstuff prepared in accordance with the present invention may also be in the form of a sandwich, an enclosed pocket, a layer of exposed fat-based portion on the dough-based portion, or any other suitable combination of a dough-based portion and a fat-based portion. In some embodiments, the foodstuff may include a dough-based
portion which was prepared by heating and gelatinizing before baking, and a dough-based portion which was not heated or gelatinized before baking.

In some embodiments, an assembled foodstuff includes a fat-based portion in an amount of about 10 wt% to about 55 wt% of the assembled foodstuff; about 15 wt% to about 50 wt% of the assembled foodstuff; about 20 wt% to about 45 wt% of the assembled foodstuff; or about 25 wt% to about 40 wt% of the assembled foodstuff. In some embodiments, an assembled foodstuff includes dough-based portion or baked casing in an amount of about 45 wt% to about 90 wt% of the assembled foodstuff; about 50 wt% to about 85 wt% of the assembled foodstuff; about 55 wt% to about 80 wt% of the assembled foodstuff; or about 60 wt% to about 75 wt% of the assembled foodstuff.

Before baking, a fat-based portion may be added to the dough in any suitable manner. In some embodiments, the dough is sheeted or extruded. In some embodiments, the dough is sheeted between conventional, counter-rotating sheeting rolls. In some embodiments, the sheeting rolls may be chilled. The dough may be sheeted by a straight sheeting process by gradually reducing the dough sheet thickness. In some embodiments, the dough may be extruded under low pressure and shear conditions. In some embodiments, dough-based portions prepare as described herein are pliable with film-forming and sheetable properties.

In some embodiments, a fat-based portion is deposited on a layer of dough. In some embodiments, a filling is sandwiched between two layers of dough. In some embodiments, the filling is exposed on the edges of the foodstuff. In some embodiments, the filling is completely enclosed within the dough. In some embodiments, the dough is crimped to partially or completely enclose the filling.

In some embodiments, the filling and dough can be coextruded at low pressure and shear conditions. In some embodiments, the filling and dough may be coextruded in a weight percent ratio of filling to dough of about 10 wt%:90 wt% to about 50 wt%:50 wt%; about 25 wt%:75wt% to about 40 wt%:60 wt%; or about 35 wt%:65 wt%.

In some embodiments, the assembled foodstuff does not include an added barrier layer (e.g., a fat migration barrier, a moisture migration barrier) between the fat-based portion and the dough.

In some embodiments, the assembled foodstuff can be cut before baking. The assembled foodstuff may be cut into any desirable size and shape. In some embodiments, the assembled foodstuff may be cut into squares, such as 2.54cm by 2.54cm (1 inch by 1 inch), or sticks, such as 2.54cm by 5.08cm (1 inch by 2 inch). Assembled foodstuff may include designs and/or patterned edges such as scalloped edges, or a sin wave design.

### Baking

Assembled foodstuff prepared in accordance with the present invention may be baked using any suitable oven or conventional method. In some embodiments, assembled foodstuffs are baked at a temperature of about 218.3ºC to about 273.9ºC, or about 232.2ºC to about 260ºC (about 425ºF to about 525ºF, or about 450ºF to about 500ºF). In some embodiments, the assembled foodstuffs are baked for about 3 to about 8 minutes, about 4 minutes to about 7 minutes, or about 5 minutes to about 6 minutes.

During baking, the foodstuff may puff up, develop an air pocket between the fat-based portion and a layer of the dough-based portion, and/or develop blistering and layering of the dough-based portion. In some embodiments, layering in the dough-based portion of the baked foodstuff simulates laminated products, even though the dough-based portion was formed by sheeting or extrusion.

In some embodiments, the foodstuffs are baked to produce a foodstuff having a moisture content of about 1% to about 5%; about 1% to about 4%; or about 2% to about 3%.

In some embodiments, after baking, the foodstuff may be dried and/or additional oil and/or salt/seasoning may be applied. Drying may be conducted by any suitable method, including convection or dielectric dryer.

### Dual Textured Foodstuff

The baked foodstuff made in accordance with the method of the present invention exhibits a dual texture including a crispy dough-based portion, such as a casing, and a soft fat-based portion, such as a filling. In some embodiments, the dough-based portion exhibits a cracker- or pretzel-like texture. In some embodiments, the dual texture is maintained throughout the shelf life of the foodstuff. In some embodiments, a baked foodstuff maintains its dual texture for at least 1 month, for at least 2 months, for at least 3 months for at least 6 months, for at least 1 year and/or for at least 2 years.

In some embodiments, the properties of the foodstuff reduce, slow or substantially prevent migration of fat and/or moisture between the dough-based portion and the fat-based portion in order to maintain the dual texture of the foodstuff. In some embodiments, fat migration between the dough-based portion and the fat-based portion is reduced, slowed or substantially prevented due to unique properties resulting from the heating of the flour slurry, and thereby gelatinizing the starch and denaturing the protein of the flour, before baking the dough. The steps of heating the flour slurry, and thereby gelatinizing the starch and denaturing protein of the flour, before baking the dough may reduce, slow, or substantially prevent fat migration between the dough-based portion and the fat-based portion during baking and/or throughout a shelf-life of the foodstuff. In some embodiments, the fat migration between the dough-based portion and the fat-based portion is reduced, slowed or substantially prevented due to the timing of the contact between the dough-based portion and the fat-based portion, i.e. after the initial heating and gelatinizing of the flour slurry.

In some embodiments, the fat concentration of the fat-based portion of a foodstuff made in accordance with the present invention remains substantially constant throughout the shelf life of the foodstuff. In some embodiments, the fat concentration of the dough-based portion of a foodstuff made in accordance with the present invention remains substantially constant throughout the shelf life of the foodstuff. In some embodiments, fat migration between the dough-based portion and the fat-based portion of foodstuffs made in accordance with the present invention is significantly less than fat migration between a dough-based portion and a fat-based portion of a foodstuff prepared by conventional preparation and baking steps, such as without a heating step before baking (e.g., without steam heating the slurry of flour and water before baking), where the foodstuffs being compared have the same initial fat gradient between the dough-based portion and the fat-based portion. In some embodiments, less than about 1% of the fat concentration of the fat-based portion migrates from the fat-based portion (e.g., to the dough-based portion) during a period of 1 month after baking, 2 months after baking, 3 months after baking, 6 months after baking, 1 year after baking and/or 2 years after baking). In some embodiments, less than about 2% of the fat concentration of the fat-based portion migrates from the fat-based portion (e.g., to the dough-based portion) during a period of 1 month after baking, 2 months after baking, 3
months after baking, 6 months after baking, 1 year after baking and/or 2 years after baking). In some embodiments, less than about 3% of the fat concentration of the fat-based portion migrates from the fat-based portion (e.g., to the dough-based portion) during a period of 1 month after baking, 2 months after baking, 3 months after baking, 6 months after baking, 1 year after baking and/or 2 years after baking). In some embodiments, less than about 4% of the fat concentration of the fat-based portion migrates from the fat-based portion (e.g., to the dough-based portion) during a period of 1 month after baking, 2 months after baking, 3 months after baking, 6 months after baking, 1 year after baking and/or 2 years after baking). In some embodiments, less than about 5% of the fat concentration of the fat-based portion migrates from the fat-based portion (e.g., to the dough-based portion) during a period of 1 month after baking, 2 months after baking, 3 months after baking, 6 months after baking, 1 year after baking and/or 2 years after baking).

In some embodiments, the cooked foodstuff includes a fat migration gradient representing the rate of migration of fat from the cooked fat-based portion (e.g., the cooked filling) to the cooked dough-based portion (e.g., the cooked casing) with which it is in direct contact. In one embodiment the fat migration gradient is approximately zero. In some embodiments, the fat migration gradient is less than approximately 0.1% (measured as a weight percent of the fat in the fat-based portion) per month. In some embodiments, the fat migration gradient is less than approximately 0.2% per month. In some embodiments, the fat migration gradient is less than approximately 0.5% per month. In some embodiments, the fat migration gradient is less than approximately 0.75% per month. In some embodiments, the fat migration gradient is less than approximately 1% per month. In some embodiments, the fat migration gradient is less than approximately 1.25% per month. In some embodiments, the fat migration gradient is less than approximately 1.5% per month. In some embodiments, the fat migration gradient is less than approximately 1.75% per month. In some embodiments, the fat migration gradient is less than approximately 2% per month.

In some embodiments, foodstuffs made in accordance with the present invention do not include an added barrier layer between the fat-based portion and the dough-based portion. In some embodiments, a dough-based material prepared according to the present invention may be
used as a barrier layer between two portions of a product. In some embodiments, a dough-based material prepared according to the present invention may be used as a barrier layer to reduce, slow or substantially prevent fat migration between two products or two portions of a product.

A foodstuff prepared from a dough-based portion and a fat-based portion according to embodiments of the present invention may provide maintenance of oil levels in the fat-based portion during baking and throughout a shelf-life of the foodstuff. Such maintenance of oil levels may allow increased quantity of inclusions in the fat-based portion, a creamier fat-based portion with less fat, and/or the ability to include lower quantities of the fat-based portion while providing the desired taste effect in the foodstuff. Preparation of a foodstuff according to embodiments of the present invention may also allow for the use of a non-aerated filling, while achieving the same reduction in fat migration as might be associated with an aerated filling alone.

Preparation of a foodstuff according to embodiments of the present invention may allow for incorporation of higher levels of whole grains, fiber and protein, or other inclusions for visual appeal. In some embodiments, whole grains, proteins and fibers are incorporated into a matrix formed during the pre-baking heating and gelatinizing step, resulting in a more palatable taste and texture than may be otherwise associated with incorporation of such levels of these ingredients. In some embodiments, heating and gelatinizing of the flour slurry before baking the dough allows for incorporation of whole grains, fiber and protein without a grainy, coarse texture and taste in the dough-based portion of the foodstuff which may be otherwise associated with incorporation of such levels of these ingredients. Preparation of a foodstuff according to embodiments of the present invention may allow for incorporation of higher levels of whole grains, fiber and protein without the effect of drying out the fat-based portion during baking or throughout a shelf-life of the foodstuff.

In some embodiments, a foodstuff is a good source of fiber and/or protein according to the regulations set by the Food and Drug Administration ("FDA"). In some embodiments, a foodstuff is an excellent source of fiber according to the regulations set by the Food and Drug Administration ("FDA"). In some embodiments, a foodstuff includes up to 10% daily value of fiber and/or protein. In some embodiments, a foodstuff includes up to 20% daily value of fiber and/or protein. In some embodiments a foodstuff, includes about 2.5 g fiber per 30 g of foodstuff, or about 5 g fiber per 30 g of foodstuff. In some embodiments, a foodstuff includes about 5 g protein per 30 g of foodstuff, or about 10 g protein per 30 g of foodstuff.

In some embodiments, heating and gelatinizing of the flour slurry before baking the dough allows for incorporation of inclusions in the dough-based portion, as they are incorporated into a matrix formed during the initial gelatinization step.

In some embodiments, the baked dough-based portion includes flour, which was heated to gelatinization before baking, in an amount of about 50 wt% to about 100 wt% of the baked dough-based portion; about 55 wt% to about 95 wt% of the baked dough-based portion; about 60 wt% to about 90 wt% of the baked dough-based portion; about 65 wt% to about 85 wt% of the baked dough-based portion; about 70 wt% to about 80 wt% of the baked dough-based portion; at least about 50 wt% of the baked dough-based portion; at least about 55 wt% of the baked dough-based portion; at least about 60 wt% of the baked dough-based portion; at least about 65 wt% of the baked dough-based portion; at least about 70 wt% of the baked dough-based portion; about 65 wt% of the baked dough-based portion; about 68 wt% of the baked dough-based portion; about 70 wt% of the baked dough-based portion; about 72 wt% of the baked dough-based portion; about 74 wt% of the baked dough-based portion; about 75 wt% of the baked dough-based portion; about 76 wt% of the baked dough-based portion; at least about 78 wt% of the baked dough-based portion; about 80 wt% of the baked dough-based portion; about 82 wt% of the baked dough-based portion; about 85 wt% of the baked dough-based portion; about 90 wt% of the baked dough-based portion; about 95 wt% of the baked dough-based portion; or about 98 wt% of the baked dough-based portion.

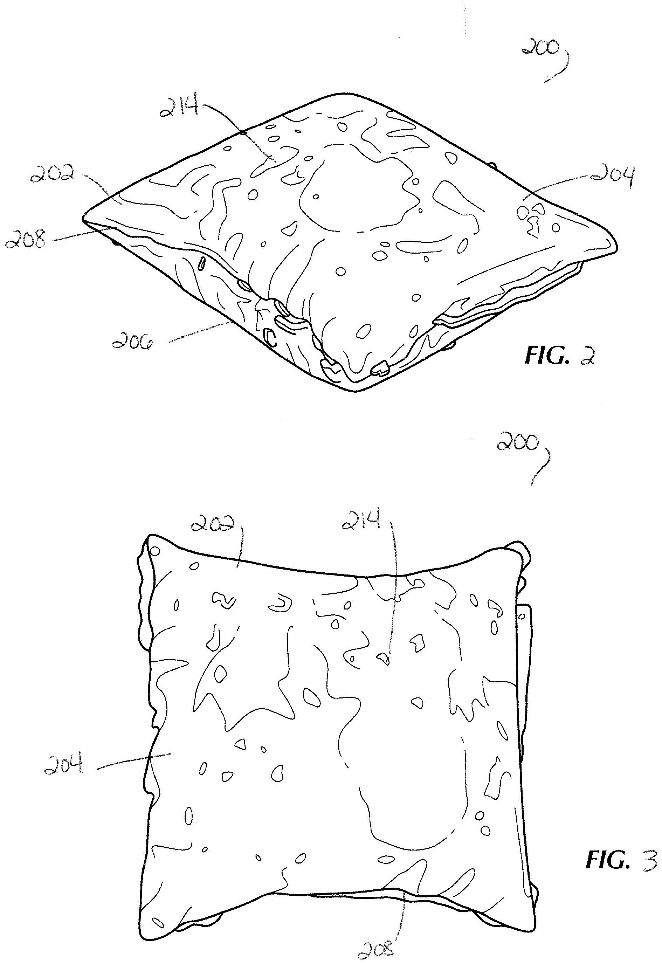

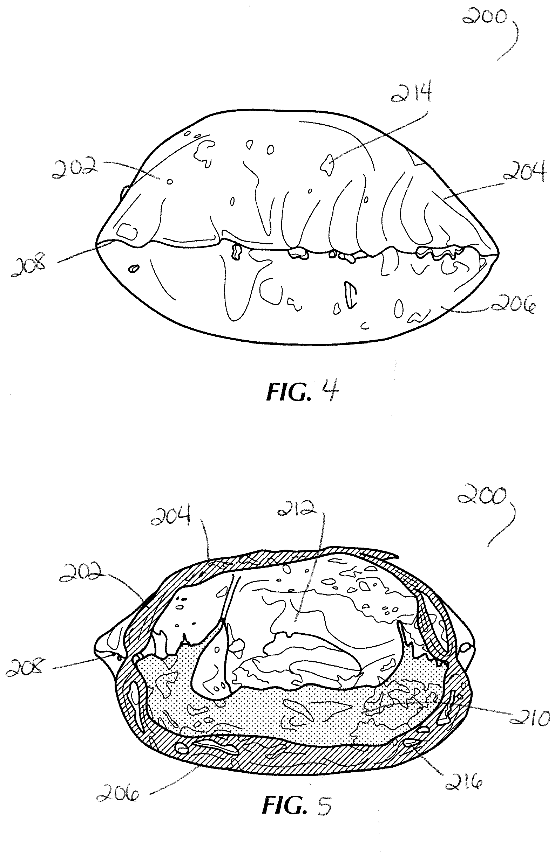

By way of example reference is now made to Figures 2-5. Foodstuff 200 may be prepared according to methods described herein. Foodstuff 200 includes dough-based casing 202, with casing top portion 204 and casing bottom portion 206. Dough-based casing 202 has a crispy, crunchy texture, and is prepared according the methods described herein. Casing top portion 204 and casing bottom portion 206 are joined at seam 208, to completely enclose filling 210, as described herein. Filling 210 is bake-stable, and has a soft creamy texture. Foodstuff 200 is assembled prior to baking, according to methods described herein.

As described herein, during baking, foodstuff 200 may puff up to create a rounded, pillow shape. As shown in Figures 2-5, after baking, foodstuff 200 exhibits a rounded, pillow shape, with casing top portion 204 and casing bottom portion 206 having convex shapes extending from seam 208. Within baked foodstuff 200, filling 210 rests on bottom casing portion 206. Air pocket 212 is created during baking, and results in a space between casing top portion 204 and filling 210 and/or casing bottom portion 206. During baking, casing 202 may form blistering 214 on the surface or bubbles 216 within casing 202.

### Examples

### Example 1: Filled Snack

A dough was prepared from the following ingredients:

| **Ingredients** | **Kg** | **Pounds** | **Ounces** | **% of Dough** |
|---|---|---|---|---|
| **Group 1** | | | | |
| Wheat flour enriched | 34.0 | 75 | 0 | 41.53% |
| Whole wheat flour | 11.3 | 25 | 0 | 13.84% |
| Salt | 0.3 | 0 | 10.4 | 0.36% |
| Water | 20.4 | 45 | 0 | 24.92% |

| **Group 2** | | | | |
|---|---|---|---|---|
| Pregelatinized corn starch | 6.5 | 14 | 6.4 | 7.97% |
| Sugar | 4.7 | 10 | 6.4 | 5.76% |
| Potato starch | 2.4 | 5 | 4.8 | 2.93% |
| Sodium acid pyrophosphate | 0.16 | 0 | 5.6 | 0.19% |
| Calcium phosphate monobasic | 0.57 | 1 | 4.0 | 0.69% |
| Sodium bicarbonate | 0.57 | 1 | 4.0 | 0.69% |

| Group 3 | | | | |
|---|---|---|---|---|
| Oil | 0.91 | 2 | 0 | 1.12% |
| **Total** | | | | 100 |

A filling may be prepared according to Formulations 1-5 described in Table 1 of the Fat-Based Portion section above.

The components of Group 1 of the dough formulation may be mixed in a dough mixer. In order to gelatinize/cook the material, steam may be injected at approximately 65.5 to 93.3ºC (150-200ºF), while mixing at 20 rpm for 10 to 20 min.

After steaming, the ingredients of Group 2 of the dough formulation may be added to the material in the dough mixer and mixed at 20 rpm for 2 min.

Next, the ingredient of Group 3 of the dough formulation may be added and mixed at 20 rpm for 2 min. After mixing the dough with the ingredient of Group 3, the dough temperature may be between 60 to 76.7ºC (140ºF - 170ºF).

The dough may then sheeted on a sheeting line.

The filling may be sandwiched between two sheets of dough. The edges may be crimped such that the filling is completely enclosed within the dough.

The assembled product may then be baked in a direct gas fire or convection or hybrid oven to form a final dual-textured product having 2-3% moisture.

### Example 2: Oat Dough

A dough may be prepared according to the following formulation:

| **Ingredients** | **Kg** | **Lbs** | % |
|---|---|---|---|
| Whole oat flour | 31.3 | 69.00 | 39.80 |
| Rolled oats | 4.31 | 9.50 | 5.48 |
| Salt | 0.3 | 0.66 | 0.38 |
| Water | 24.95 | 55.00 | 31.72 |
| Parboiled brown rice flour | 11.11 | 24.50 | 14.13 |
| Corn starch | 4.99 | 11.00 | 6.34 |
| Potato starch | 0.45 | 1.00 | 0.58 |
| Calcium phosphate monobasic | 0.12 | 0.26 | 0.15 |
| Sodium bicarbonate | 0.12 | 0.26 | 0.15 |
| Ammonium bicarbonate | 0.09 | 0.20 | 0.12 |
| Safflower oil | 0.91 | 2.00 | 1.15 |
| | **78.64** | **173.380** | **100.00** |

The dough may be prepared by first mixing the oat flour, rice flour, salt, and water at room temperature in a dough mixer to prepare a slurry. The slurry may be gelatinized/cooked by injecting steam to heat the slurry to approximately 76.7 to 82.2ºC (170ºF - 180ºF), while mixing at 20 rpm for 10 to 14 min.

The remaining ingredients (except safflower oil) may be added to the gelatinized/cooked material and mixed at 20 rpm for 2 min.

Safflower oil may then be added to the material and mixed at 20 rpm for 2 min. After this step, the dough temperature may be expected to be about 60 to 76.7ºC (140ºF -170ºF).

The dough may then be sheeted and combined with a filler before baking.

### Example 3: Dough with Nuts

A dough may be prepared according to the following formulation:

| **Ingredients** | **Kg** | **Lbs** | % |
|---|---|---|---|
| Wheat flour | 29.7 | 65.5 | 30.05 |
| Parboiled brown rice flour | 3.4 | 7.5 | 3.44 |
| Sea Salt | 0.1 | 0.3 | 0.14 |
| Sugar | 0.9 | 2.0 | 0.92 |
| Chopped nuts | 29.5 | 65.0 | 29.82 |
| Corn starch | 3.9 | 8.5 | 3.90 |
| Potato Starch | 3.9 | 8.5 | 3.90 |
| Sodium bicarbonate | 0.1 | 0.25 | 0.11 |
| Calcium phosphate monobasic | 0.1 | 0.25 | 0.11 |
| Ammonium bicarbonate | 0.1 | 0.2 | 0.09 |
| Water | 27.2 | 60.0 | 27.52 |
| **TOTAL** | 98.9 | **218.0** | **100.00** |

The dough may be prepared by first mixing the wheat four, rice flour, salt, and water at room temperature in dough mixer to form a slurry. The slurry may be gelatinized/cooked by injecting steam to heat the slurry to approximately 76.7 to 82.2ºC (170ºF -180ºF) while mixing at 20 rpm for 10-14 min.

The remaining ingredients may then be added and mixed at 20 rpm for 2 min. The dough may then be sheeted and combined with a filler, or coextruded with a filler before baking.

### Example 4: Wheat Cheese Dough

A dough may be prepared according to the following formulation:

| **Ingredients** | **Kg** | **Lbs** | % |
|---|---|---|---|
| Wheat flour | 26.5 | 58.500 | 36.71 |
| Water | 22.7 | 50.000 | 31.37 |
| Parboiled brown rice flour | 11.1 | 24.500 | 15.37 |
| Color | 0.1 | 0.260 | 0.16 |
| Ground paprika | 0.1 | 0.260 | 0.16 |
| Ground red pepper | 0.0 | 0.035 | 0.02 |
| 3 months aged skim milk curd | 2.3 | 5.000 | 3.14 |
| Autolyzed yeast extract powder | 0.9 | 2.000 | 1.25 |
| Aged whole milk cheddar cheese | 1.4 | 3.000 | 1.88 |
| Concentrated enzyme modified cheddar cheese | 0.6 | 1.250 | 0.78 |
| Corn starch | 2.7 | 6.000 | 3.76 |
| Potato starch | 2.7 | 6.000 | 3.76 |
| Salt | 0.2 | 0.440 | 0.28 |
| Calcium phosphate monobasic | 0.3 | 0.660 | 0.41 |
| Sodium bicarbonate | 0.1 | 0.260 | 0.16 |
| Ammonium bicarbonate | 0.1 | 0.200 | 0.13 |
| Safflower oil | 0.5 | 1.000 | 0.63 |
| **Total** | **72.3** | **159.365** | **100.00** |

The dough may be prepared by first mixing the wheat flour, brown rice flour, salt, and water at room temperature in a dough mixer to form a slurry. The slurry may be gelatinized/cooked by injecting steam to heat the slurry to approximately 76.7 to 82.2ºC (170ºF -180ºF) while mixing at 20 rpm for 10-14 min.

The remaining ingredients (except safflower oil) may be added to the gelatinized/cooked material and mixed at 20 rpm for 2 min.

Safflower oil may then be added to the material and mixed at 20 rpm for 2 min. After this step, the dough temperature may be expected to be about 60 to 76.7ºC (140ºF -170ºF).

The dough may then be sheeted and combined with a filler, or coextruded with a filler before baking.

### Example 5: Corn Cheese Dough

A dough may be prepared according the following formulation:

| **Ingredients** | **Kg** | **Lbs** | **%** |
|---|---|---|---|
| Corn flour | 31.3 | 69.000 | 40.98 |
| Salt | 0.3 | 0.660 | 0.39 |
| Water | 22.7 | 50.000 | 29.69 |
| Parboiled brown rice flour | 11.1 | 24.500 | 14.55 |
| Sugar | 4.3 | 9.500 | 5.64 |
| Corn starch | 5.0 | 11.000 | 6.53 |
| Potato starch | 0.5 | 1.000 | 0.59 |
| Calcium phosphate monobasic | 0.1 | 0.260 | 0.15 |
| Sodium bicarbonate | 0.1 | 0.260 | 0.15 |
| Ammonium bicarbonate | 0.1 | 0.200 | 0.12 |
| Safflower oil | 0.9 | 2.000 | 1.19 |
| **Total** | 76.4 | **168.380** | **100.00** |

The dough may be prepared by first mixing the corn flour, brown rice flour, salt, and water at room temperature in a dough mixer to form a slurry. The slurry may be gelatinized/cooked by injecting steam to heat the slurry to approximately 76.7 to 82.2ºC (170ºF -180ºF) while mixing at 20 rpm for 10-14 min.

The remaining ingredients (except safflower oil) may be added to the gelatinized/cooked material and mixed at 20 rpm for 2 min.

Safflower oil may then be added to the material and mixed at 20 rpm for 2 min. After this step, the dough temperature may be expected to be about 60 to 76.7ºC (140ºF -170ºF).

The dough may then be sheeted and combined with a filler, or coextruded with a filler before baking.

### Example 6: Protein and Fiber Dough

A dough may be prepared according to the following formulation:

| **Ingredients** | **Kg** | **Lbs** | **%** |
|---|---|---|---|
| Wheat flour | 31.8 | 70 | 36.48 |
| Soy protein | 11.3 | 25 | 13.03 |
| Polydextrose | 6.8 | 15 | 7.82 |
| Salt | 0.3 | 0.66 | 0.34 |
| Corn starch | 5.6 | 12.4 | 6.46 |
| Potato starch | 1.5 | 3.3 | 1.72 |
| Sugar | 3.8 | 8.4 | 4.38 |
| Sodium bicarbonate | 0.6 | 1.25 | 0.65 |
| Calcium phosphate monobasic | 0.6 | 1.25 | 0.65 |
| Diammonium phosphate | 0.2 | 0.37 | 0.19 |
| Ammonium bicarbonate | 0.6 | 1.25 | 0.65 |
| Safflower oil | 1.4 | 3.0 | 1.56 |
| Water | 22.7 | 50 | 26.06 |
| **TOTAL** | **87.0** | **191.88** | **100.00** |

### Example 7: Sweet Dough

A dough may be prepared according to the following formulation:

| **Group 1** | **Kg** | **LBS** | **%** |
|---|---|---|---|
| Wheat flour | 34.0 | 75.00 | 42.54 |
| Whole wheat flour | 11.3 | 25.00 | 14.18 |
| Water | 9.1 | 20.00 | 11.34 |
| Salt | 0.6 | 1.25 | 0.71 |
| Sugar | 9.8 | 21.625 | 12.27 |
| Corn syrup | 1.2 | 2.5625 | 1.45 |
| Honey | 1.1 | 2.50 | 1.42 |
| High fructose corn syrup 42% | 2.6 | 5.625 | 3.19 |
| Molasses sugar cane | 1.1 | 2.50 | 1.42 |

| **Group 2** | | | |
|---|---|---|---|
| Corn starch | 1.8 | 4.00 | 2.27 |
| Potato starch | 1.8 | 4.00 | 2.27 |
| Sodium bicarbonate | 0.6 | 1.25 | 0.71 |
| Calcium phosphate monobasic | 0.1 | 0.25 | 0.14 |
| Ammonium bicarbonate | 0.1 | 0.25 | 0.14 |
| Encapsulated cinnamon powder | 0.2 | 0.50 | 0.28 |

| **Group 3** | | | |
|---|---|---|---|
| Oil | 4.5 | 10.00 | 5.67 |
| **TOTAL** | **80** | **176.31** | **100.00** |

The dough may be prepared by first mixing the components of Group 1 of the dough formulation in a dough mixer to form a slurry. The slurry may be heated in the dough mixer to a temperature of 76.7 to 82.2ºC (170°F to 180°F), while mixing at 20 rpm for 10 to 14 min.

After steaming, the ingredients of Group 2 of the dough formulation may be added to the material in the dough mixer and mixed at 20 rpm for 2 min.

Next, the ingredient of Group 3 of the dough formulation may be added and mixed at 20 rpm for 2 min.

The dough may then be sheeted and combined with a filler, or coextruded with a filler before baking.

## Claims

1. A method for producing a dual-textured foodstuff comprising:
(a) admixing ingredients including flour and water to form a slurry;
(b) exposing the slurry to a temperature of 65.6° C to 93.3°C (150°F to 200°F) for 8 to 20 minutes to produce a gelatinized dough with 90 to 100% gelatinisation of the flour;
(c) adding a fat-based component to the gelatinised dough to form a precursor foodstuff, wherein the dough is sheeted into at least two layers and the fat-based component is added between the sheeted dough layers, or wherein the dough and fat-based component are extruded.;
(d) baking the precursor foodstuff to obtain a foodstuff having a dual texture including a baked, fat-based component having a soft texture and a baked dough-based component having a crispy texture,
wherein the flour of the slurry comprises 70 wt% to 80 wt% of the baked dough-based component and wherein the fat-based component comprises a fat content of at least 40 wt% and the dough-based component comprises a fat content of less than 5 wt %.

2. The method of claim 1, further comprising, before the adding a fat-based component to the dough to form a precursor foodstuff, mixing the gelatinized dough with ingredients including starch.

3. The method of claim 1, wherein the heat comprises steam.

4. The method of claim 1, wherein the fat-based component is completely enclosed within the baked dough-based component.

5. The method of claim 1 wherein adding the fat-based component to the dough comprises placing the fat-based component in direct contact with the dough.

## Patentansprüche

1. Verfahren zur Herstellung eines dual-strukturierten Nahrungsmittels, das Folgendes umfasst:
(a) Vermischen von Bestandteilen, einschließlich Mehl und Wasser, um einen Brei zu bilden;
(b) Aussetzen des Breis gegenüber einer Temperatur von 65,6 °C bis 93,3 °C (150 °F bis 200 °F) für 8 bis 20 Minuten, um einen verkleisterten Teig mit 90 bis 100 % Verkleisterung des Mehls herzustellen;
(c) Zugeben eines fettbasierten Bestandteils zu dem verkleisterten Teig, um ein Vorläufernahrungsmittel zu bilden, wobei der Teig in mindestens zwei Schichten umhüllt wird und die fettbasierte Komponente zwischen die umhüllten Teigschichten gegeben wird, oder wobei der Teig und der Fettbestandteil extrudiert werden;
(d) Backen des Vorläufernahrungsmittels, um ein Nahrungsmittel mit einer dualen Konsistenz zu erhalten, einschließlich eines gebackenen, fettbasierten Bestandteils mit einer weichen Konsistenz und einem gebackenen Bestandteil auf Teigbasis mit einer knusprigen Konsistenz,
wobei das Mehl des Breis zu 70 Gew. -% bis 80 Gew. -% den gebackenen Bestandteil auf Teigbasis umfasst und wobei der fettbasierte Bestandteil einen Fettgehalt von mindestens 40 Gew. -% umfasst und der Bestandteil auf Teigbasis einen Fettgehalt von weniger als 5 Gew. -%
umfasst.

2. Verfahren nach Anspruch 1, welches ferner vor dem Zugeben eines fettbasierten Bestandteils zu dem Teig, um ein Vorläufernahrungsmittel zu bilden, das Mischen des verkleisterten Teigs mit Bestandteilen einschließlich Stärke umfasst.

3. Verfahren nach Anspruch 1, wobei die Wärme Dampf umfasst.

4. Verfahren nach Anspruch 1, wobei der fettbasierte Bestandteil vollständig in dem gebackenen Bestandteil auf Teigbasis eingeschlossen ist.

5. Verfahren nach Anspruch 1, wobei das Zugeben des fettbasierten Bestandteils zu dem Teig das Platzieren des fettbasierten Bestandteils in direktem Kontakt mit dem Teig umfasst.

## Revendications

1. Procédé de production d'un produit alimentaire à double texture comprenant :
(a) le mélange d'ingrédients incluant de la farine et de l'eau pour former une bouillie ;
(b) l'exposition de la bouillie à une température de 65,6 °C à 93,3 °C (150 °F à 200 °F) pendant 8 à 20 minutes pour produire une pâte gélatinée avec 90 à 100 % de gélatinisation de la farine ;
(c) l'ajout d'un composant à base de matière grasse à la pâte gélatinée pour former un produit alimentaire précurseur, dans lequel la pâte est abaissée en feuilles en au moins deux couches et le composant à base de matière grasse est ajouté entre les couches de pâte en feuilles, ou dans lequel la pâte et le composant à base de matière grasse sont extrudés ;
(d) la cuisson du produit alimentaire précurseur pour obtenir un produit alimentaire ayant une double texture incluant un produit alimentaire précurseur cuit ayant une texture molle et un composant à base de pâte cuit ayant une texture croustillante,
dans lequel la farine de la bouillie comprend 70 % en poids à 80 % en poids du composant à base de pâte cuit et dans lequel le composant à base de matière grasse comprend une teneur en matières grasses d'au moins 40 % en poids et le composant à base de pâte comprend une teneur en matières grasses inférieure à 5 %
en poids.

2. Procédé selon la revendication 1, comprenant en outre, avant l'ajout d'un composant à base de matière grasse à la pâte pour former un produit alimentaire précurseur, le mélange de la pâte gélatinée avec des ingrédients incluant de l'amidon.

3. Procédé selon la revendication 1, dans lequel la chaleur comprend de la vapeur.

4. Procédé selon la revendication 1, dans lequel le composant à base de matière grasse est complètement enfermé au sein du composant à base de pâte cuit.

5. Procédé selon la revendication 1, dans lequel l'ajout du composant à base de matière grasse à la pâte comprend la mise en place du composant à base de matière grasse en contact direct avec la pâte.
